# EUROPÄISCHE PATENTSCHRIFT

(11) **EP 2 593 205 B1**
(45) Veröffentlichungstag und Bekanntmachung des Hinweises auf die Patenterteilung: **09.03.2016**
(21) Anmeldenummer: 11730918.7
(22) Anmeldetag: 08.07.2011
(51) Int. Cl.: B01D 35/143, B01D 36/00

(54) **FILTERELEMENT**
FILTERING ELEMENT
ÉLÉMENT FILTRANT

(30) Priorität: 14.07.2010 DE 102010027038
(43) Veröffentlichungstag der Anmeldung: 22.05.2013
(73) Patentinhaber: Hydac Filtertechnik GmbH, 66280 Sulzbach/Saar (DE)
(72) Erfinder: KOCH, Edwin, 66636 Tholey (DE); SCHWENDER, Matthias, 66459 Kirkel (DE); SCHMITZ, Andreas, 66459 Kirkel (DE)
(74) Vertreter: Bartels, Martin Erich Arthur
(86) Internationale Anmeldenummer: PCT/EP2011/003421
(87) Internationale Veröffentlichungsnummer: WO 2012/007135

(56) Entgegenhaltungen:
- EP-A1- 1 340 976
- EP-A2- 1 844 835
- DE-U- 6 919 836

## Beschreibung

Die Erfindung betrifft ein Filterelement für Filtereinrichtungen, umfassend ein einen Filterraum definierendes Filtermaterial zur Filtration von Fluiden, wie Hydraulikflüssigkeiten, und mindestens einen Wasserindikator, der an einer im Filtrationsbetrieb mit Fluid in Kontakt kommenden Stelle vorgesehen ist und die Anwesenheit von Wasser im Fluid optisch erkennbar anzeigt.

Für die Betriebssicherheit von Hydrauliksystemen und anderen technischen Anlagen, die mit fluiden Betriebsmitteln arbeiten, hängt die Betriebssicherheit in hohem Maße vom störungsfreien Arbeiten der zugehörigen Filtereinrichtungen ab. Voraussetzung hierfür ist, dass die Filterelemente der Filtereinrichtungen über die gesamten Einsatzzeiten, die zwischen den vorgegebenen Filterwechseln liegen, ihre volle, einwandfreie Funktionsfähigkeit beibehalten. Angesichts des hohen materiellen Wertes der betreffenden Hydrauliksysteme und der sich dadurch im Störfalle ergebenden Kosten ist man daher gezwungen, auf die Einhaltung vorgeschriebener Betriebsbedingungen besonderes Augenmerk zu legen, um möglichen Betriebsstörungen vorzubeugen. Werden Filterelemente bei den Wechselintervallen ausgebaut, dann werden daher die Filterelemente auf mögliche, im Betrieb eingetretene Beschädigungen sorgfältig untersucht. Dabei hat sich in der Praxis jedoch gezeigt, dass es, wenn Schäden oder Beeinträchtigungen beispielsweise am Filtermedium des ausgebauten Filterelementes erkennbar sind, schwierig oder gar unmöglich ist, die genaue Ursache der Beeinträchtigung oder Beschädigung abzuleiten.

Ein Filterelement der eingangs genannten Art ist aus DE 69 19 836 U bekannt. Bekannt ist ein Ölofentankfilter bestehend aus einem oben offenen zylindrischen Körper mit angeformtem Boden, in dessen oberen offenen Teil ein Einfülltrichter mit mindestens einem darin angeordneten Schmutzabscheidefilter angeordnet ist und an dessen Boden ein mechanischer Schlamm- und Wasserfänger vorgesehen ist. Am oberen Schmutzabscheidefilter und am Boden des zylindrischen Körpers ist jeweils ein Wasserindikator angeordnet. Der Wasserindikator kann aus einem wasseranzeigenden Reagenzpapier, einem wasseranzeigenden Granulat oder einer Paste bestehen. Die wasseranzeigenden Indikatoren ermöglichen es, anwesendes Wasser rechtzeitig aus der Vorrichtung zu entfernen.

Heutige, hochwirksame Filtermedien reagieren auf die Anwesenheit von Wasser in Fluid kritisch, so dass bei einem Betrieb mit Fluiden, die mit Wasseranteilen belastet sind, die Filtrationswirkung leiden kann. Wenn es beim Betrieb eines Hydrauliksystems zu einem Rückgang der Filtrationsgüte kommt, ohne dass die zulässigen Betriebsgrenzen, wie Druckniveau, maximaler Volumenstrom, Differenzdruck (Ansprechen des Bypassventils) oder dergleichen, überschritten sind, dann kann bei einem Filterelementwechsel erkannt werden, ob das Problem durch Wasser im Fluid verursacht ist. Der Betreiber des Systems ist somit in der Lage, die geeigneten, entsprechenden Gegenmaßnahmen zu treffen, um damit den störungsfreien Filtrationsbetrieb herbeizuführen.

Im Hinblick auf diese Problematik stellt sich die Erfindung die Aufgabe, ein Filterelement zur Verfügung zu stellen, dessen Einsatz den sicheren Betrieb der Filtereinrichtung und damit des zugehörigen Systems begünstigt sowie eine einfache Herstellung des Filterelements ermöglicht.

Erfindungsgemäß ist diese Aufgabe durch ein Filterelement gelöst, das die Merkmale des Patentanspruches 1 in seiner Gesamtheit aufweist. Demgemäß besteht eine wesentliche Besonderheit der Erfindung darin, dass der mindestens eine Wasserindikator an mindestens einer Endkappe zur Einfassung an einem Ende des einen Filterraum, insbesondere einen Filterhohlraum, definierenden Filtermaterials vorgesehen und/oder zumindest teilweise Bestandteil der Endkappe ist und/oder an einer Stützstruktur zur Umfassung des einen Filterraum, insbesondere einen Filterhohlraum, definierenden Filtermaterials vorgesehen und/oder zumindest teilweise Bestandteil der Stützstruktur ist. Vorteilhafte Ausgestaltungen des erfindungsgemäßen Filterelements sind Gegenstände der Unteransprüche.

Ein Wasserindikator, der typischerweise in Form eines Teststreifens oder als Aufnahme für einen entsprechenden Stoff vorliegt, kann in einfacher Weise an einer Endkappe und/oder einer Stützstruktur befestigt werden, was insgesamt die Herstellung des erfindungsgemäßen Filterelements vereinfacht. Beide Bauteile, Endkappe und Stützstruktur, bieten Außenoberflächen zum Befestigen bzw. Ankleben eines Teststreifens und/oder zur Beschichtung mit einem entsprechenden als Wasserindikator dienenden Stoff bzw. Material. Die obere Endkappe bietet sich zur Ausbildung einer typischerweise muldenförmigen Aufnahme für einen Wasserindikator bzw. einen entsprechenden Stoff an. An einem Filterelement können mehrere Wasserindikatoren, an Endkappen und/oder einer Stützstruktur, vorgesehen sein, was eine ortsaufgelöste Analyse des Auftretens von Wasser im Filtrationsbetrieb ermöglicht.

Die Endkappe oder die Stützstruktur selbst können als Wasserindikator ausgebildet sein, beispielsweise derart, dass sie aus einem mehrkomponentigen Material, wie einem Kunststoffmaterial, bestehen, dessen einer Materialbestandteil als Wasserindikator dient. Alternativ kann die Endkappe oder die Stützstruktur mit einer den Wasserindikator enthaltenden Beschichtung versehen sein. Es ist jedoch auch denkbar, nur Flächen- oder Volumenteile der Endkappe oder der Stützstruktur als Wasserindikator auszubilden bzw. mit einem Wasserindikator zu versehen. Zweckmäßigerweise wird ein Wasserindikator an die zu erwartende Betriebstemperatur im Filtrationsbetrieb angepasst bzw. bedarfsoptimiert ausgewählt. Bei in einem größeren Temperatur- und/oder Druckbereich betriebenen Filterelement können mehrere, unterschiedlich ausgebildete Wasserindikatoren vorgesehen sein.

Wenn der Wasserindikator an einer Stelle angeordnet ist, die zumindest bei aus der Filtereinrichtung ausgebautem Filterelement visuell beobachtbar ist, kann der Betreiber durch unmittelbaren Augenschein, ohne dass besondere Maßnahmen oder Hilfsmittel erforderlich wären, die gegebenenfalls vorhandene Wasserbelastung des Fluids erkennen.

Die Anordnung kann mit Vorteil so getroffen sein, dass der jeweilige Wasserindikator an der Außenseite der jeweiligen Endkappe vorgesehen ist. Auf besonders einfache Weise lässt sich hierbei ein Wasserindikator in Form eines Kupfersulfat enthaltenden Teststreifens an der Endkappe befestigen, beispielsweise durch Ankleben. Kupfersulfat nimmt bei Kontakt mit Wasser eine intensive grünblaue Färbung an, die visuell sehr gut erkennbar ist. Alternativ kann an der betreffenden Endkappe eine Aufnahme für unter dem Markennamen "Silicagel" geführten als sich bei Kontakt verfärbender Wasserindikator gebildet sein.

Weiterhin besteht die Möglichkeit, dass das Filterelement bei Vorhandensein einer an der Außenseite seines Filtermaterials befindlichen, fluiddurchlässigen Stützstruktur den Wasserindikator an der Stützstruktur aufweist. Mit Vorteil kann hierbei die Anordnung so getroffen sein, dass die Stützstruktur außenseitig mit einer Markierung, beispielsweise Beschriftung, versehen ist, die als Wasserindikator dienende Stoffe, wie Kupfersulfat, enthält.

Mit besonderem Vorteil kann diesbezüglich mindestens ein die Anwesenheit von Wasser durch Verfärbung signalisierender Wasserindikator vorgesehen sein, wobei vorzugsweise ein sich bei Anwesenheit von Wasser irreversibel verfärbender Wasserindikator benutzt werden kann.

Nachstehend ist die Erfindung anhand von in der Zeichnung dargestellten Ausführungsbeispielen im Einzelnen erläutert. Es zeigen:
- Fig. 1: eine schematisch vereinfacht gezeichnete Seitenansicht eines Ausführungsbeispieles des erfindungsgemäßen Filterelementes;
- Fig. 2: eine stark schematisch vereinfacht gezeichnete Draufsicht eines zweiten Ausführungsbeispieles des erfindungsgemäßen Filterelementes;
- Fig. 3: einen schematisch vereinfacht gezeichneten Teillängsschnitt entsprechend der Schnittlinie III-III von Fig. 2; und
- Fig. 4: eine schematisch vereinfacht gezeichnete Seitenansicht eines Filterelementes gemäß einem dritten Ausführungsbeispiel der Erfindung.

Nachstehend ist die Erfindung anhand eines Filterelementes 1 erläutert, das in einem nicht dargestellten Filtergehäuse einer Filtereinrichtung auswechselbar aufnehmbar ist. Das Filterelement 1 ist bezüglich einer Längsachse 3 im großen Ganzen kreiszylindrisch gestaltet und weist als endseitige Einfassungen eines Filtermaterials 5 eine obere Endkappe 7 und eine untere Endkappe 9 auf, von denen in der bei derartigen Filterelementen üblichen Weise beispielsweise die obere Endkappe 7 einen Fluiddurchgang 11 in einen inneren Filterhohlraum innerhalb des Filtermaterials 5 bildet.

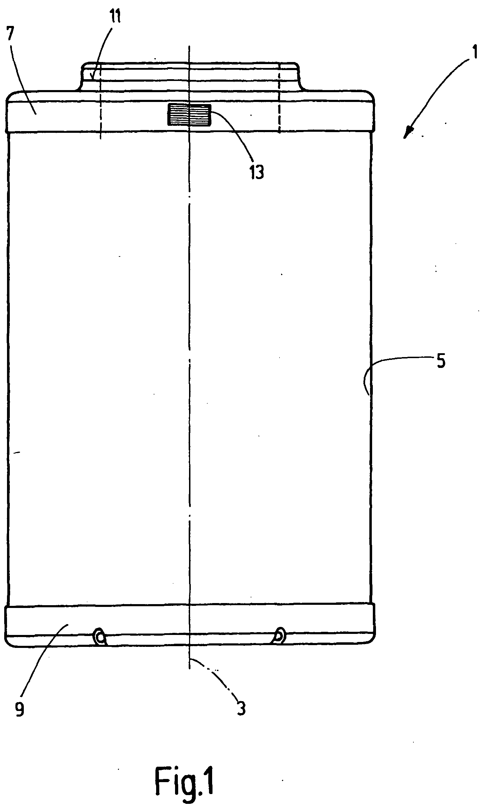

Bei dem Ausführungsbeispiel von Fig. 1 befindet sich an der Seitenwandfläche der oberen Endkappe 7 ein Wasserindikator in Form eines Teststreifens 13. Dabei handelt es sich um einen auf die Endkappe 7 aufgeklebten Papierstreifen, auf dem sich Kupfersulfat befindet. Bei einem Kontakt mit Wasser färbt sich Kupfersulfat grün-blau, so dass sich der Teststreifen 13 intensiv und visuell gut erkennbar verfärbt. Bei an der Außenseite der Endkappe 7 befindlicher Anordnung des Teststreifens 13 ist bei einem ausgebauten Fil- * terelement 1 daher ohne weiteres deutlich erkennbar, ob bei dem zu filtrierenden Fluid eine Wasserbelastung vorliegt. Der Teststreifen 13 braucht nicht an der in Fig. 1 gezeigten Stelle angebracht zu sein, sondern könnte ebenso gut an einer anderen, vorzugsweise an einer von außen her sehr gut sichtbaren Stelle angebracht sein, beispielsweise an der Oberseite der Endkappe 7.

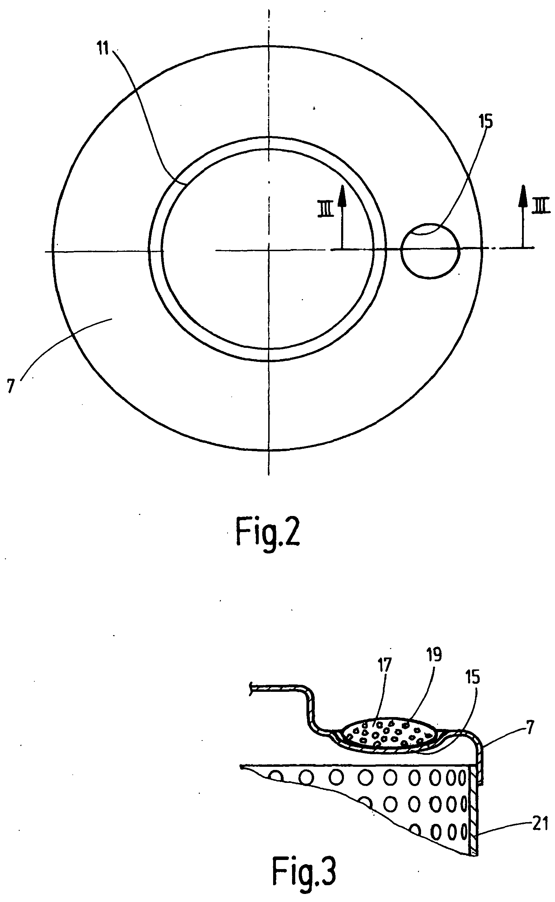

Die Fig. 2 und 3 verdeutlichen ein zweites Ausführungsbeispiel, bei dem anstelle eines Teststreifens 13 als Wasserindikator Silicagel benutzt wird. Silicagel beruht auf der Basis von Kieselerde, die stark hygroskopisch ist. Für die Verwendung als Wasserindikator wird sie oft als sogenanntes Blaugel mit einem Zusatz von Kobalt(II)-Chlorid verwendet, wobei es sich bei Kontakt mit Wasser von blau nach blaurosa bis weißlich verfärbt. Alternativ kann Kieselgel mit kobaltfreien Substanzen versetzt als sogenanntes Orangegel eingesetzt werden, das sich bei Adsorption von Wasser von orange nach weiß verfärbt.

Wie Fig. 2 und 3 zeigen, ist an der Oberseite der oberen Endkappe 7 eine Einwölbung 15 als Aufnahme für ein Silicagel enthaltendes Testelement 17 (Fig. 3) vorgesehen. Wie Fig. 3 zeigt, befindet sich das Silicagel in Form eines Granulates 19 innerhalb einer permeablen Hülle aus Papier oder Kunststoff, eingeklebt in die Einwölbung 15.

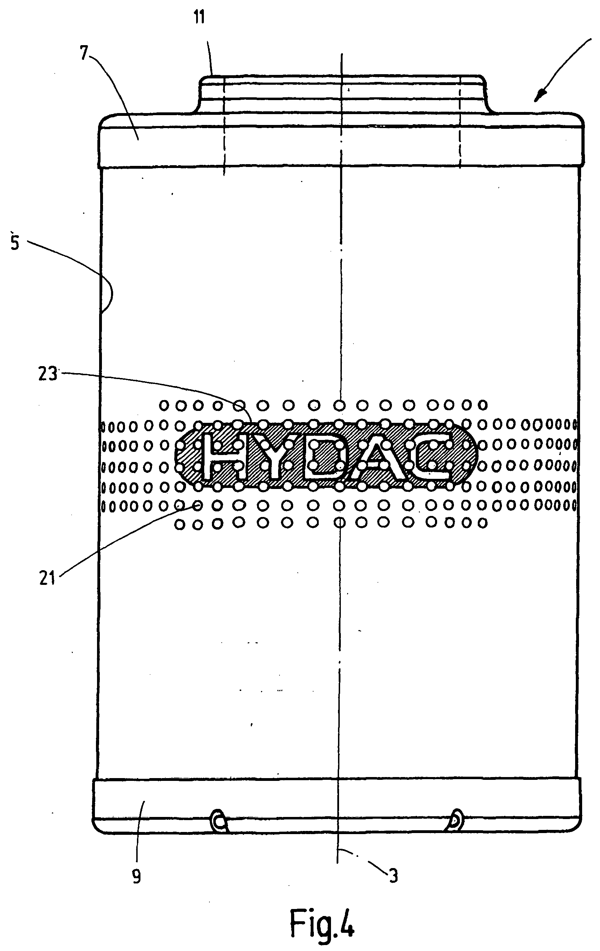

Fig. 4 zeigt ein weiteres Ausführungsbeispiel, bei dem eine die äußere Umhüllung des Filtermaterials 5 bildende, fluiddurchlässige Stützstruktur 21 mit einer aufgedruckten Markierung 23 versehen ist, die einen lesbaren Schriftzug bildet. Bei diesem Beispiel bildet die aufgedruckte Markierung 23 den Wasserindikator. Bei einer aus einem geeigneten Kunststoffmaterial, PET gebildeten Stützstruktur 21 kann eine für das Bedrucken geeignete Druckfarbe benutzt werden, die mit einem Wasserindikator, beispielsweise Kupfersulfat, versetzbar ist, so dass die die Anwesenheit von Wasser signalisierende Verfärbung an entsprechenden Bereichen der Markierung 23 auftritt und beobachtbar ist.

Anstelle der Benutzung von Kupfersulfat oder Silicagel können andere Substanzen benutzt werden, beispielsweise Indikatoren, wie sie in neuerer Zeit bei gegen Nässe empfindlichen elektronischen Geräten, wie Mobiltelefonen oder dergleichen, benutzt werden und die sich bei Kontakt mit Wasser rot färben. Derartige Indikatoren lassen sich in Entsprechung zu dem in Fig. 1 gezeigten Ausführungsbeispiel durch Kleben beispielsweise an einer Endkappe 7, 9 befestigen.

## Patentansprüche

1. Filterelement für Filtereinrichtungen, umfassend:
- ein einen Filterraum definierendes Filtermaterial (5) zur Filtration von Fluiden, und
- mindestens einen Wasserindikator (13, 19, 23), der an einer im Filtrationsbetrieb mit Fluid in Kontakt kommenden Stelle vorgesehen ist und die Anwesenheit von Wasser im Fluid optisch erkennbar anzeigt,
- **dadurch gekennzeichnet, dass** der mindestens eine Wasserindikator (13, 19, 23)
- an einer Endkappe (7, 9) zur Einfassung an einem Ende des Filtermaterials (5) vorgesehen und/oder zumindest teilweise Bestandteil der Endkappe (7, 9) ist und/oder
- an einer das Filtermaterial (5) umgebenden fluiddurchlässigen Stützstruktur (21) vorgesehen und/oder zumindest teilweise Bestandteil der Stützstruktur (21) ist.

2. Filterelement nach Anspruch 1, **dadurch gekennzeichnet, dass** mindestens ein Wasserindikator (13, 19, 23) an einer Stelle (7, 9, 21) angeordnet ist, die zumindest bei aus der Filtereinrichtung ausgebautem Filterelement (1) visuell beobachtbar ist.

3. Filterelement nach einem der vorhergehenden Ansprüche, **dadurch gekennzeichnet, dass** der jeweilige Wasserindikator (13, 19) an der Außenseite der jeweiligen Endkappe (7) vorgesehen ist.

4. Filterelement nach einem der vorhergehenden Ansprüche, **dadurch gekennzeichnet, dass** der jeweilige Wasserindikator in Form eines Kupfersulfat enthaltenden Teststreifens (13) an der jeweiligen Endkappe (7) befestigt ist.

5. Filterelement nach einem der vorhergehenden Ansprüche, **dadurch gekennzeichnet, dass** an der betreffenden Endkappe (7) eine Aufnahme (15) für Silicagel (19) als sich bei Kontakt mit Wasser verfärbender Wasserindikator gebildet ist.

6. Filterelement nach einem der vorhergehenden Ansprüche, **dadurch gekennzeichnet, dass** die Stützstruktur (21) außenseitig mit einer Markierung (23), beispielsweise Beschriftung, versehen ist, die als Wasserindikator dienende Stoffe, wie Kupfersulfat, enthält.

7. Filterelement nach einem der vorhergehenden Ansprüche, **dadurch gekennzeichnet, dass** der vom Filtermaterial (5) definierte Filterraum als Filterhohlraum und/oder zylinderförmig ausgebildet ist.

8. Filterelement nach einem der vorhergehenden Ansprüche, **dadurch gekennzeichnet, dass** die jeweilige Endkappe (7, 9) eine kreisförmige Einfassung ausbildet und/oder die Stützstruktur (21) hohlzylinderförmig ausgebildet ist.

9. Filterelement nach einem der vorhergehenden Ansprüche, **dadurch gekennzeichnet, dass** mindestens ein die Anwesenheit von Wasser durch Verfärbung signalisierender Wasserindikator (13, 19, 23) vorgesehen ist.

10. Filterelement nach einem der vorhergehenden Ansprüche, **dadurch gekennzeichnet, dass** mindestens ein sich bei Anwesenheit von Wasser irreversibel verfärbender Wasserindikator (13, 19, 23) vorgesehen ist.

## Claims

1. A filtering element for filtering devices, comprising:
- a filtering material (5) which defines a filtering space, intended for the filtration of fluids, and
- at least one water indicator (13, 19, 23) which is provided at a location coming into contact with fluid during filtration operation and indicates the presence of water in the fluid in a visually recognisable manner,
- **characterised in that** the at least one water indicator (13, 19, 23)
- is provided on an end cap (7, 9) for encasement at one end of the filtering material (5) and/or is at least partially a component part of the end cap (7, 9), and/or
- is provided on a fluid-permeable supporting structure (21) surrounding the filtering material (5) and/or is at least partially a component part of the supporting structure (21).

2. The filtering element according to Claim 1, **characterised in that** at least one water indicator (13, 19, 23) is arranged at a location (7, 9, 21) that can be visually identified when the filtering element (1) is removed from the filtering device.

3. The filtering element according to any of the preceding claims, **characterised in that** the respective water indicator (13, 19) is provided on the outside of the respective end cap (7).

4. The filtering element according to any of the preceding claims, **characterised in that** the respective water indicator in the form of a test strip (13) containing copper sulphate is fastened to the respective end cap (7).

5. The filtering element according to any of the preceding claims, **characterised in that** a receptacle (15) for silica gel is formed on the respective end cap (7) as a water indicator which changes colour upon contact with water.

6. The filtering element according to any of the preceding claims, **characterised in that** the supporting structure (21) is provided on the outside with a mark (23), for example lettering, which contains substances, such as copper sulphate, that serve as a water indicator.

7. The filtering element according to any of the preceding claims, **characterised in that** the filtering space defined by the filtering material (5) is in the form of a filtering cavity and/or is cylindrical.

8. The filtering element according to any of the preceding claims, **characterised in that** the respective end cap (7, 9) forms a circular encasement and/or the supporting structure (21) is in the form of a hollow cylinder.

9. The filtering element according to any of the preceding claims, **characterised in that** at least one water indicator (13, 19, 23) signalling the presence of water by changing colour is provided.

10. The filtering element according to any of the preceding claims, **characterised in that** at least one water indicator (13, 19, 23) that changes colour irreversibly in the presence of water is provided.

## Revendications

1. Elément filtrant pour des dispositifs de filtration, comprenant :
- un matériau (5) filtrant définissant un espace de filtre pour la filtration de fluides et
- au moins un indicateur (13, 19, 23) d'eau, qui est prévu en un endroit venant en contact avec du fluide en fonctionnement de filtration et qui indique, de manière visible, la présence d'eau dans le fluide,
- **caractérisé en ce que** le au moins un indicateur (13, 19, 23) d'eau
- est prévu sur une coiffe (7, 9) d'extrémité pour coiffer une extrémité du matériau (5) filtrant et/ou fait partie, au moins partiellement, de la coiffe (7, 9) d'extrémité et/ou
- est prévu sur une structure (21) d'appui perméable au fluide, entourant le matériau (5) filtrant et/ou fait partie, au moins partiellement, de la structure (21) d'appui.

2. Elément filtrant suivant la revendication 1, **caractérisé en ce qu'**au moins un indicateur (13, 19, 23) d'eau est mis en un endroit (7, 9, 21), qui peut être observé visuellement, au moins lorsque l'élément (1) filtrant est démonté du dispositif de filtration.

3. Elément filtrant suivant l'une des revendications précédentes, **caractérisé en ce que** l'indicateur (13, 19) d'eau est prévu du côté extérieur de la coiffe (7) d'extrémité.

4. Elément filtrant suivant l'une des revendications précédentes, **caractérisé en ce que** l'indicateur d'eau est, sous la forme d'une bande (13) de test contenant du sulfate de cuivre, fixé à la coiffe (7) d'extrémité.

5. Elément filtrant suivant l'une des revendications précédentes, **caractérisé en ce qu'**il est formé, sur la coiffe (7) d'extrémité concernée, un logement (15) pour du gel (19) de silice servant d'indicateur d'eau se colorant au contact de l'eau.

6. Elément filtrant suivant l'une des revendications précédentes, **caractérisé en ce que** la structure (21) d'appui est pourvue du côté extérieur d'un repérage (23), par exemple d'une inscription, qui contient une substance servant d'indicateur d'eau, comme du sulfate de cuivre.

7. Elément filtrant suivant l'une des revendications précédentes, **caractérisé en ce que** l'espace de filtre défini par le matériau (5) filtrant est constitué sous la forme d'une cavité de filtre et/ou sous la forme d'un cylindre.

8. Elément filtrant suivant l'une des revendications précédentes, **caractérisé en ce que** la coiffe (7, 9) d'extrémité forme une bordure circulaire et/ou la structure (21) d'appui est constituée sous la forme d'un cylindre creux.

9. Elément filtrant suivant l'une des revendications précédentes, **caractérisé en ce qu'**il est prévu au moins un indicateur (13, 19, 23) d'eau signalant la présence d'eau par coloration.

10. Elément filtrant suivant l'une des revendications précédentes, **caractérisé en ce qu'**il est prévu au moins un indicateur (13, 19, 23) d'eau se colorant de manière irréversible en présence d'eau.
